# EUROPEAN PATENT SPECIFICATION

(11) **EP 0 654 879 B1**
(45) Date of publication and mention of the grant of the patent: **02.04.1997**
(21) Application number: 94116544.1
(22) Date of filing: 20.10.1994
(51) Int. Cl.: H02G 3/04

(54) **Raceway for holding electrical cables or the like, with a cover of the so-called wrapround type**
Elektrischer Kabeln-Halterungskanal mit umhüllender Abdeckung
Canalisation de maintien de câbles électriques avec couvercle enveloppant

(30) Priority: 24.11.1993 IT GE930100
(43) Date of publication of application: 24.05.1995
(73) Proprietor: BOCCHIOTTI SOCIETA'PER L'INDUSTRIA ELETTROTECNICA S.P.A., I-16121 Genova (IT)
(72) Inventor: Bruzzone, Melchiorre, I-16121 Genova (IT)
(74) Representative: Porsia, Attilio, Dr.

(56) References cited:
- FR-A- 2 593 973

## Description

The present invention relates to raceways with a cover for electrical cables or the like, and in particular raceways with a so-called wrapround cover.

In electrical systems the use is known of raceways for accommodating electrical cables. These raceways commonly consist of a container base for the cables, i.e. the actual raceway, which is connected to the surface on which the said cables are to be installed, and a lid or cover, the object of which is to cover these cables, both for protective and aesthetic purposes. Both the raceway and the cover are commonly made of plastics material which is shaped by extrusion.

In order to render these raceways more secure, for some time covers have been used, the lateral limbs of which completely cover the lateral walls of the raceway. For the purpose of connecting the cover stably to the raceway, outwardly facing grooves have been provided on the lateral walls of the raceway, such as to provide the lateral walls with a U-shaped transverse cross-section which is inclined towards the open side of the raceway. These grooves connect with a fin which is disposed on the inner surface of the lateral limbs of the cover, and is inclined towards the closing plane of the latter, such as to ensure stable closing of the raceway.

However, maintenance, repair or replacement of the wires disposed inside the raceway may require the latter to be opened; in this case, the shape of the above-described raceway makes it particularly difficult to open without causing some damage or weakening of the structure. In fact, this stop fin of the cover co-operates with the groove in the base such that the folding angle of the cover has to be substantially forced in order to open the raceway. In order to limit this forcing, the idea had been conceived of positioning this fin such that it was inserted only in the lower part of the raceway; however this arrangement renders the cover less stable in its seat, with obvious aesthetic and practical disadvantages.

In order to eliminate the disadvantages which exist in raceways with a cover of the above-described type, the object of the present invention is a raceway with a wrapround cover which consists of a raceway provided with a base and lateral walls and a cover provided with lateral limbs which extend along the entire length of the lateral walls of the raceway, the lateral walls of the raceway being provided with grooves with a U-shaped transverse cross-section, characterized in that the lateral limbs of the cover are provided on their inner surface which faces the grooves of the lateral walls of the raceway, with projections, the transverse cross-section profile of which is in the shape of a double tooth, comprising an upper toothed projection which has an upper surface which is inclined towards the base of the raceway, and a lower toothed projection which preferably has a stop surface for a step which preferably delimits the lower edge of the groove.

By this means, the raceway according to the present invention enables the wrapround cover to be removed without excessive forcing of the limbs, and simultaneously ensures that the cover is connected stably to the container base of the raceway.

Further advantages and features of the present invention will become apparent from the following description of a preferred embodiment, provided by way of non-limiting example, with reference to the single attached drawing, in which:

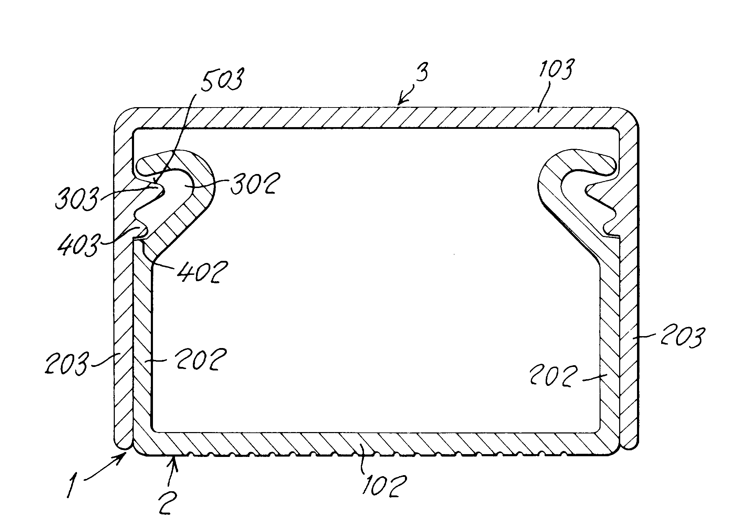

Figure 1 is a transverse cross-section of the raceway with a wrapround cover according to the present invention.

In Figure 1, 1 designates a raceway with a wrapround cover according to the present invention. It comprises the actual raceway 2 and a cover 3. The raceway 2 has a base wall 102 and two lateral walls 202. At their free ends which are opposite the base wall 102, the lateral walls of the raceway 2 are shaped so as to contain grooves 302, which in transverse cross-section are in the shape of a U inclined upwards with asymmetrical wings, the higher wing being shorter than the lower wing. At the base of the lower wing there is a flat step 402, the purpose of which will be described hereinafter. The cover 3 has a closing plane 103 which is parallel to the base 102, and is provided on its longer sides with two limbs 203 which are perpendicular to the plane 103, and the length of which is such as to cover completely the lateral walls 202 of the raceway 2. On each of the two lateral limbs 203 of the cover 3, on their inner surface which faces the lateral walls 202 of the raceway, and in the position of the grooves 302, there are projections 303, 403 which project inwardly with an essentially toothed transverse cross-section profile. The larger projection 303, with its upper side which is inclined towards the base of the raceway 2, is at the height of the upper wing of the groove 302. The projection 403 is smaller, and is disposed below the projection 303, such that its lower side is at the height of the step 402.

When the raceway is installed on the required surface, and after it has been fitted with the cables for which it is intended, it is closed by the cover 3. At the moment of closing, the teeth 303 and 403 are positioned inside the groove 302, thus locking the cover stably. In fact, whereas the upper wall 503 of the tooth 303 abuts the upper wing of the groove 302, the lower wall of the tooth 403 abuts the flat step 402 of the groove 302 in the form of a stop. The presence of the two projections 303, 403 locks the cover 3 stably to the raceway 2.

When the cover 3 needs to be opened for inspections, repairs or replacement of parts inside the raceway, it is sufficient to raise the limbs 203 such that the upper wall 503 of the tooth 303 acts as a raiser for the upper wing of the groove 302, enabling the wing of the groove 302 to slide downwards, thus disengaging the connection between the projections and the groove. The projections used according to the present invention ensure intactness of the cover, which need not undergo considerable forcing, and owing to the shape of these projections, the cover can be extracted relatively easily, at the same time as providing a high level of security. In addition, closing of the cover is more stable and is free from vertical play which characterized raceways with wrapround covers known according to the state of the art, this play being necessary in order to open the cover.

## Claims

1. Raceway for holding electrical cables or the like, comprising a raceway (2) provided with a base (102) and lateral walls (202) and a cover (3) which is provided with lateral limbs (203) which extend along the entire length of the lateral walls (202) of the said raceway, the lateral walls (202) of the raceway (2) being provided with grooves (302) with a U-shaped transverse cross-section, characterized in that the said lateral limbs (203) of the cover (3) are provided on their inner surface which faces the grooves (302) of the lateral walls (202) of the raceway, with projections (303, 403), the transverse cross-section profile of which is in the shape of a double tooth, comprising an upper toothed projection (303) with an upper surface (503) which is inclined towards the base (102) of the raceway, and a lower toothed projection (403).

2. Raceway according to Claim 1, in which in their lower portion, the said grooves (302) have a flat step (402), which in the closing position of the cover cooperates with the said lower tooth (403).

## Patentansprüche

1. Kabelkanal zum Halten elektrischer Kabel oder dergleichen, enthaltend einen Kabelkanal (2), ausgestattet mit einem Grundteil (102) und seitlichen Wänden (202) und einer Abdeckung (3), die mit seitlichen Schenkeln (203) versehen ist, die entlang der gesamten Länge der seitlichen Wände (202) des besagten Kabelkanals hervorstehen, wobei die seitlichen Wände (202) des Kabelkanals (2) mit Rillen (302) mit einem quer zur Längserstreckung U-förmigen Querschnitt ausgestattet sind,
**dadurch gekennzeichnet, daß**
die besagten seitlichen Schenkel (203) der Abdeckung (3) an ihrer inneren Oberfläche, die den Rillen (302) der seitlichen Wände (202) des Kabelkanals gegenüberliegt, mit Vorsprüngen (303, 403) ausgestattet sind, deren quer zur Längserstreckung im Querschnitt U-förmiges Profil in der Form eines doppelten Zahnes ist, enthaltend einen oberen gezahnten Vorsprung (303) mit einer oberen Fläche (503), die zu dem Grundteil (102) des Kabelkanals geneigt ist, und einen unteren gezahnten Vorsprung (403).

2. Kabelkanal gemäß Anspruch 1, bei dem in ihrem unteren Bereich die besagten Rillen (302) eine flache Stufe (402) aufweisen, die in der geschlossenen Stellung der Abdeckung mit dem besagten unteren Zahn (403) zusammenwirkt.

## Revendications

1. Canalisation pour des câbles électriques ou des éléments semblables, comprenant une canalisation (2) qui comporte une base (102) et des parois latérales (202), et un couvercle (3) qui comporte des ailes latérales (203) qui s'étendent sur la totalité de la longueur des parois latérales (202) de la canalisation, les parois latérales de la canalisation (2) comportant des gorges (302) avec une section transversale en forme de U, caractérisée en ce que les ailes latérales (203) du couvercle (3) comportent sur leur surface intérieure qui fait face aux gorges (302) des parois latérales (202) de la canalisation, des saillies (303, 403) dont le profil de section transversale a la forme d'une double dent, comprenant une saillie en forme de dent supérieure (303) avec une surface supérieure (503) qui est inclinée vers la base (102) de la canalisation, et une saillie en forme de dent inférieure (403).

2. Canalisation selon la revendication 1, dans laquelle dans leur partie inférieure, les gorges (302) ont un épaulement plat (402) qui coopère avec la dent inférieure (403) dans la position de fermeture du couvercle.
